# EUROPEAN PATENT SPECIFICATION

(11) **EP 1 564 725 B1**
(45) Date of publication and mention of the grant of the patent: **11.07.2007**
(21) Application number: 05001950.4
(22) Date of filing: 31.01.2005
(51) Int. Cl.: G11B 5/48, G11B 5/54

(54) **Suspension assembly having flexure limiter and actuator of a hard disk drive using the same**
Aufhängungseinheit mit Biegungsbegrenzer und Aktuator für ein Festplattenlaufwerk welcher diese verwendet
Dispositif de suspension avec limiteur de flexion et actuateur pour un disque dur employant ce dispositif

(30) Priority: 10.02.2004 KR 2004008644
(43) Date of publication of application: 17.08.2005
(73) Proprietor: SAMSUNG ELECTRONICS CO., LTD., Suwon-si, Gyeonggi-do (KR)
(72) Inventor: Choi, Byoung-gyou, Gwonseon-gu Suwon-si Gyeonggi-do (KR); Hwang, Ji-ho, Suwon-si Gyeonggi-do (KR)
(74) Representative: Grünecker, Kinkeldey, Stockmair & Schwanhäusser Anwaltssozietät

(56) References cited:
- US-A- 5 930 079
- US-A1- 2002 075 602
- US-A1- 2002 093 767
- US-B1- 6 424 498

## Description

### BACKGROUND OF THE INVENTION

### 1. Field of the Invention

The present invention relates to a hard disk drive, and, more particularly, to a suspension assembly to support a slider, on which a read/write head is mounted, and to an actuator to move the read/write head to a predetermined position of a disk.

### 2. Description of the Related Art

A hard disk drive (HDD) is a device that reproduces/records data from/on a disk using a read/write head, and includes an actuator to move the read/write head to a predetermined position of the disk. The actuator includes a swing arm, a suspension assembly installed in one end portion of the swing arm to elastically bias a slider toward a surface of the disk, in which the read/write head is mounted on the slider, and a voice coil motor (VCM) to rotate the swing arm.

When the hard disk drive is powered on and the disk starts to rotate, the voice coil motor rotates the swing arm to move the slider over a recording surface of the disk. The read/write head, mounted on the slider, reproduces or records data from/on the recording surface of the disk.

Meanwhile, if the hard disk drive ceases to operate, that is, if the disk is stopped, the voice coil motor moves and parks the read/write head out of the recording surface of the disk in order to prevent the read/write head from colliding against the recording surface of the disk. Generally, the head parking system may be classified into a contact start stop (CSS) system and a ramp loading system. In the CSS system, a parking zone in which data is non-recordable is provided in an inner circumference of the disk and the head is parked in contact with the parking zone. In the ramp loading system, a ramp is installed outside the disk and the head is parked on the ramp.

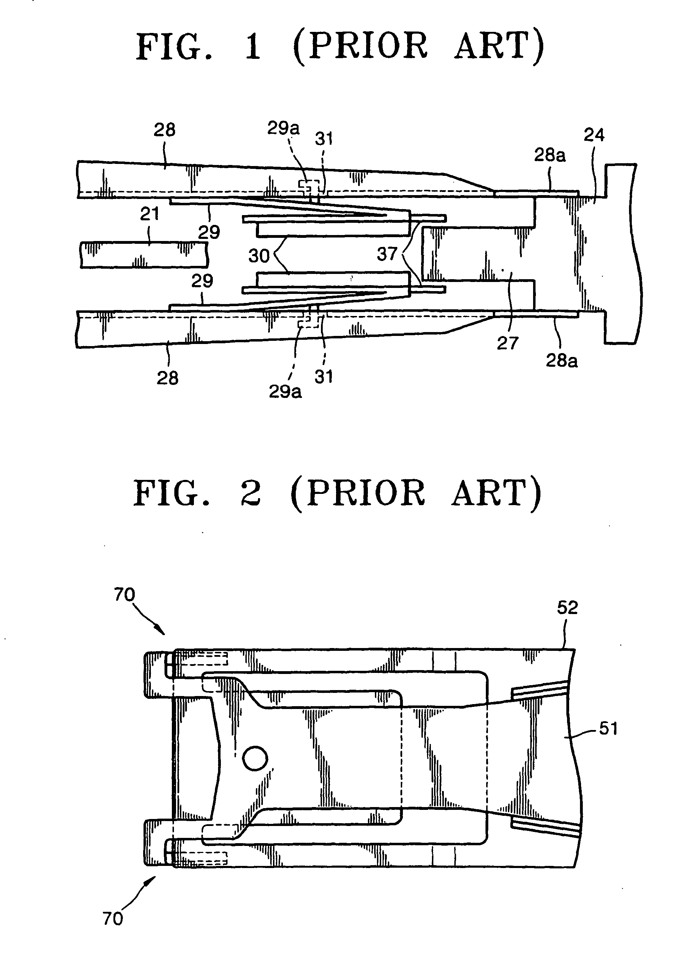

FIG. 1 is an exemplary view showing a conventional suspension assembly of an actuator of a hard disk drive, which is disclosed in U.S. Patent No. 6,067,209.

Referring to FIG. 1, two suspension assemblies are arranged on both sides of a disk 21 respectively. One end portion of a flexure 29 is attached to a load beam 28 of the suspension assembly and a slider 30 is attached to the flexure 29 using an adhesive agent. An end-tab 28a is extendedly formed on a front end of the load beam 28. The end-tab 28a is supported in contact with a surface of a ramp 24. A first limiter 37 is provided on a front end of the flexure 29 and a block member 27 is provided on the ramp 24. In addition, a second limiter 29a is provided between the front end and rear end of the flexure 28. The second limiter 29a extends through an aperture 31, which is formed in a portion of the load beam 28.

If a vertical shock is applied to the conventional suspension assembly constructed as above, the first limiter 37 contacts the block member 27 of the ramp 24 and the second limiter 29a becomes engaged with the load beam 28. Therefore, a movement of the flexure 29 in the pitching direction is limited, so as to prevent a collision of the sliders 30, which face each other.

Since the first limiters 37 are, however, disposed very close to the sliders 30, the first limiter 37 may collide strongly against the block member 27 if a relatively strong shock is applied to the conventional suspension assembly. The shock is directly transferred to the slider 30, such that the sliders 30 are frequently separated from the flexures 29.

Meanwhile, a crash stopper is provided in the hard disk drive to limit the clockwise and counterclockwise rotation of the actuator. If a horizontal shock is applied to the actuator from the outside of the hard disk drive when the hard disk drive operates, or if a horizontal shock is applied to the actuator due to a collision with the crash stopper in a reliability test of the hard disk drive, the flexures 29 are moved or twisted in a rolling direction. Thus, the sliders 30 may collide against the surface of the disk 21. As a result, the head and the disk 21 may be damaged or a deformation may be caused, resulting in the degradation of the read/write performance of the head.

In the conventional suspension assembly, the first and second limiters 37 and 29a may cope with the vertical shock, but cannot effectively cope with the horizontal shock and the resultant twisted deformation of the flexures 29.

FIG. 2 is an exemplary view showing a conventional suspension assembly of an actuator for a hard disk drive, which is disclosed in U.S. Patent No. 6,388,843.

Referring to FIG. 2, a limiter 70 to limit a movement of a flexure 52 in the pitching direction is provided on both sides of a front end of a load beam 51. However, the limiter 70 of the suspension assembly also has a problem in that the limiter 70 cannot limit a movement of the flexure 52 in a rolling direction.

Meanwhile, U.S. Patent No. 6,445,546 discloses a suspension assembly, in which slots are formed on a load beam and tabs bent from a flexure are inserted into the slots. In such a structure, however, an area where a slider is attached to the flexure becomes narrower due to the tabs. Therefore, the slider may be easily separated from the flexure due to an external shock. Further, the assembling process becomes difficult because the tabs must be bent after their insertion into the slots.
US 2002/0075602 discloses a head gimbal assembly flexure arm displacement limiter wherein a ramp is arranged for supporting a load slider, which is part of the head gimbal assembly. This assembly is attached to an actuator arm. At the end of the load beam a lift tab is arranged to engage the ramp. The gimbal has flexure arms connected by a gimbal cross member and tabs form a pair of first limiter members mounted to a cross member of the load beam. The gimbal includes a pair of second limiter members adapted to engage corresponding first limiter members, respectively.
US 6,424,498 B1 discloses some kind of suspension limiter which is arranged in a distance to a corresponding end tab. An inner head support portion as part of a gimbal comprises a bent tab with a catch hole in its long leg. The catch hole is used for receiving a tab as part of the load beam.
US 5,930,079 (cf. the preamble of claim 1) discloses a flexure mounted to a load beam with a tongue defining a dimple. A flexure frame has a continued extent with an aperture. This aperture may be closed or may be opened to the side. A load beam has an extent portion introduced in the corresponding flexure aperture.

### SUMMARY OF THE INVENTION

It is an object of the present invention to provide a suspension assembly and an actuator of a hard disk drive using the same, wherein the suspension assembly is capable of preventing a deformation of a flexure and damage of a read/write head due to vertical and horizontal shocks applied to the actuator.

To solve this object, a suspension assembly of an actuator of a hard disk drive and a corresponding actuator are provided with the features of claims 1 and 13.
Advantageous embodiments of the invention are disclosed by the subclaims.

The flexure limiter may be disposed close to a contact portion between the end-tab and the ramp. Further, the flexure limiter may include two vertical portions which are bent from the front end of the flexure in a vertical direction, and a horizontal portion connecting upper ends of the two vertical portions. Vertical and horizontal portion may define the hole. In this case, a first gap is formed between the horizontal portion of the flexure limiter and the end-tab in a vertical direction, and a second gap is formed between the vertical portions of the flexure limiter and the end-tab in a horizontal direction. Sidewalls may be formed along both edge portions of the load beam. The end-tab may be convex in an upward direction toward the ramp.

According to another aspect of the present invention, an actuator of a hard disk drive includes a swing arm pivotally mounted on a base member of the hard disk drive, a suspension assembly to elastically bias a slider, on which a read/write head is mounted, toward a surface of a disk, and a voice coil motor to rotate the swing arm to move the read/write head to a predetermined position of the disk. The suspension assembly may include features as listed above.

According to the present invention, in addition to the pitching and rolling movements of the flexure due to the shock applied to the actuator, the twisted deformation of the flexure may be limited below a predetermined level. Thus, preventing the deformation of the flexure and the damage of the head, which are caused by the shock applied to the actuator, is possible. Thus, improving reliability in the operation of the hard disk drive is also possible.

Additional and/or other aspects and advantages of the invention will be set forth in part in the description which follows.

### BRIEF DESCRIPTION OF THE DRAWINGS

These and/or other aspects and advantages of the invention will become apparent and more readily appreciated from the following description of the embodiments, taken in conjunction with the accompanying drawings of which:
FIG. 1 is a side view showing one example of a conventional suspension assembly of an actuator of a hard disk drive;
FIG. 2 is a side view showing another example of a conventional suspension assembly of an actuator of a hard disk drive;
FIG. 3 is a plan view schematically illustrating a structure of a hard disk drive, which uses a suspension assembly;
FIG. 4 is a perspective view of the suspension assembly of FIG. 3 according to an embodiment of the present invention;
FIG. 5 is a longitudinal sectional view of the suspension assembly shown in FIG. 4;
FIG. 6 is a front view of the suspension assembly shown in FIG. 4;
FIG. 7 is a view illustrating a relation between a bended deformation of a load beam due to an external shock and a position of a limiter in the suspension assembly according to the present invention; and
FIG. 8 is a view illustrating an operation of a flexure limiter with respect to a twisted deformation of the flexure in the suspension assembly of FIG. 4.

### DETAILED DESCRIPTION OF THE PREFERRED EMBODIMENTS

Reference will now be made in detail to the embodiments of the present invention, examples of which are illustrated in the accompanying drawings, wherein like reference numerals refer to the like elements throughout. The embodiments are described below to explain the present invention by referring to the figures..

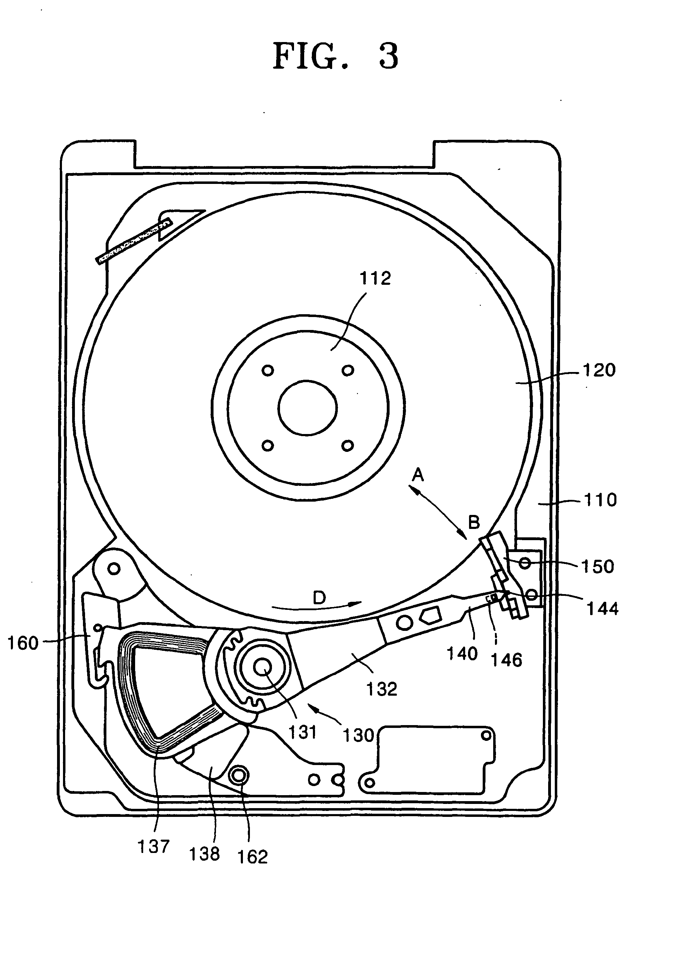

FIG. 3 is a plan view schematically illustrating a structure of a hard disk drive, which uses a suspension assembly of an actuator according to the present invention.

Referring to FIG. 3, the hard disk drive includes a spindle motor 112 mounted on a base member 110, one or more disks 120 placed on the spindle motor 112, and an actuator 130 to move a read/write head (not shown) to a predetermined position of the disk 120. Here, the read/write head is a device to reproduce/record data from/on the disk 120.

The actuator 130 includes a swing arm 132 that is pivotally mounted on a pivot bearing 131 that is installed in the base member 110, a suspension assembly 140 installed in one end portion of the swing arm 132 to elastically bias the slider 146 toward a surface of the disk, in which the head is mounted on the slider 146, and a voice coil motor (VCM) to rotate the swing arm 132.

The voice coil motor is provided with a coil 137 coupled to the other end portion of the swing arm 132 and a magnet 138 arranged to face the coil 137. The voice coil motor is controlled by a servo control system. The voice coil motor rotates the swing arm 132 in a direction based on Fleming's left hand rule by an interaction between current inputted to the coil 137 and a magnetic field induced by the magnet 138.

Particularly, when the hard disk drive is powered on and the disk 120 starts to rotate in a direction indicated by an arrow D, the voice coil motor rotates the swing arm 132 in a counterclockwise direction indicated by an arrow A, such that the slider 146 on which the read/write head is mounted moves over a recording surface of the disk 120. The slider 146 lifts up from a surface of the disk 120 to a predetermined height by a lift force, which occurs due to the rotating disk 120. In this state, the read/write head mounted on the slider 146 reproduces/records data from/on the recording surface of the disk 120.

Meanwhile, when the hard disk drive is not powered and the disk 120 is stopped, the voice coil motor rotates the swing arm 132 in a clockwise direction, indicated by an arrow B, in order to prevent the head from colliding against the recording surface of the disk 120, such that the read/write head is moved and parked out of the recording surface of the disk 120. To this end, a ramp 150 is installed outside the disk 150 and an end-tab 144 is provided in the suspension assembly 140. The end-tab 144 is moved from the disk 120 to the ramp 150 and then supported by the ramp 150.

When the read/write head is parked on the ramp 150, the actuator 130 may be rotated arbitrarily due to external shock or vibration applied to the hard disk drive and may escape from the ramp 150. Such an event may lead to the actuator 130 undesirably moving toward the recording surface of the disk 120. In this case, the head may come in contact with the recording surface of the disk 120, resulting in damage to both the head and the recording surface of the disk 120. Accordingly, when the disk 120 is stopped and the head is parked on the ramp 150, the actuator 130 needs to be locked in a predetermined position in order to prevent the actuator 130 from being rotated arbitrarily. For this purpose, an actuator latch 160 is provided.

When the actuator 130 is rotated in a counterclockwise direction by the voice coil motor, the actuator latch 160 may prevent the end-tab 144 from escaping from the ramp 150. Meanwhile, the hard disk drive includes an additional crash stopper 162, which limits a counterclockwise rotation of the actuator 130 in order to prevent the suspension assembly 140 from colliding against the spindle motor 112 when the actuator 130 is rotated in a counterclockwise direction by the voice coil motor.

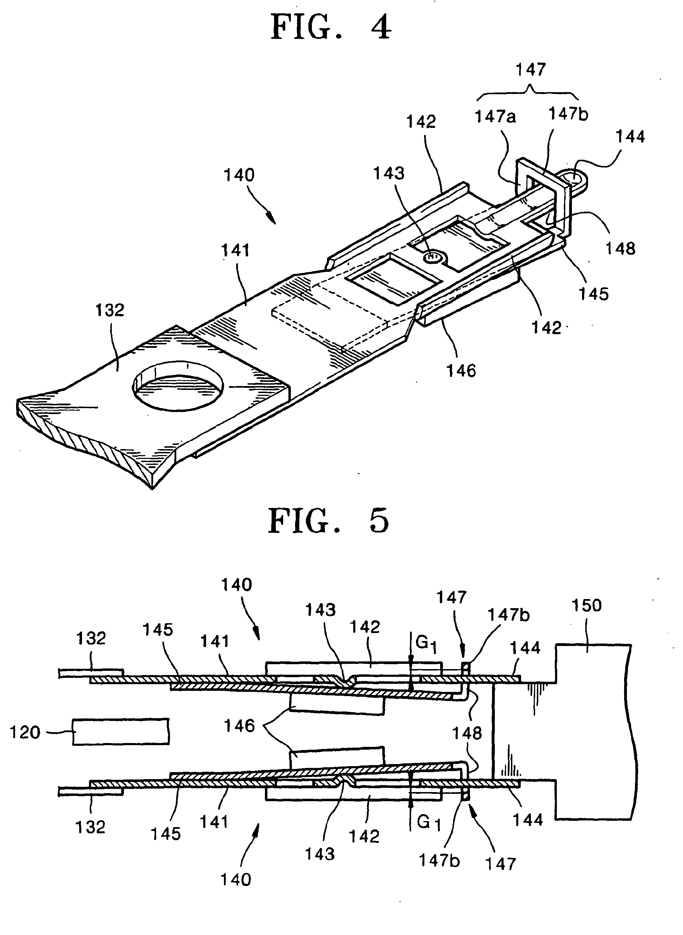

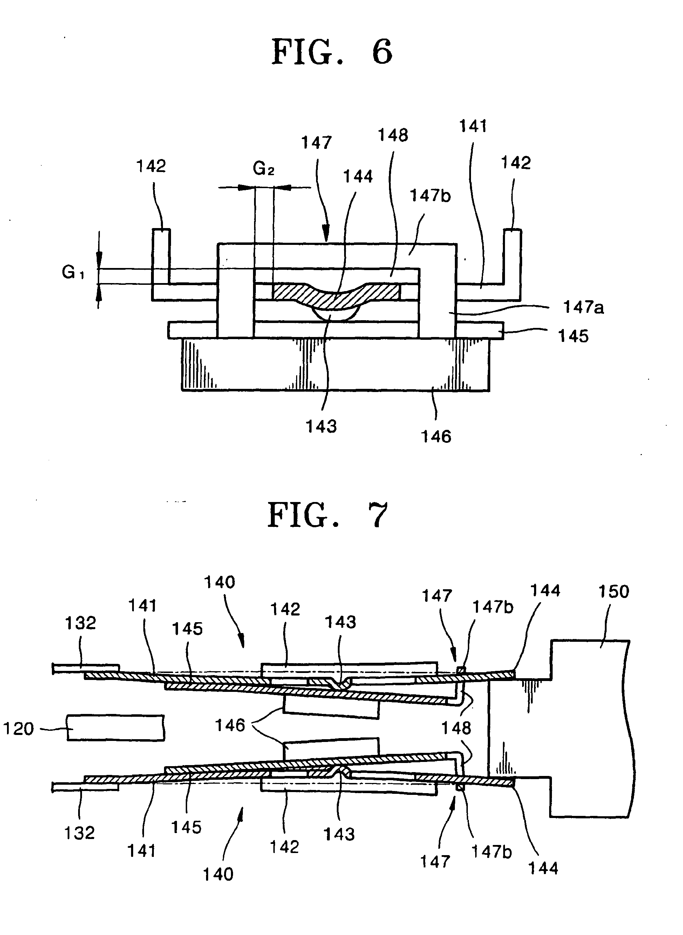

FIG. 4 is a perspective view of the suspension assembly of FIG. 3 according to another embodiment of the present invention, and FIG. 5 is a longitudinal sectional view of the suspension assembly shown in FIG. 4. FIG. 6 is a front view of the suspension assembly of FIG. 4.

Referring to FIGS. 4 through 6, the suspension assembly 140 is provided in the actuator 130 and elastically biases the slider 146 toward the surface of the disk 120. Here, the read/write head is mounted on the slider 146.

The suspension assembly 140 includes a load beam 141, a flexure 145 and a flexure limiter 147. The flexure limiter 147 limits the pitching and rolling movements of the front end of the flexure 145 within a predetermined range.

The load beam 141 is coupled to an end portion of the swing arm 132 of the actuator 130. The load beam 141 is generally made by pressing a metal plate, such as stainless steel, which has a thin thickness of, for example, about 0.05 mm. In order to increase stiffness of the load beam 141, sidewalls 142 are formed along both edges of the load beam 141. Bending both edges of the load beam 141 upwardly may form the sidewalls 142.

The end-tabs 144 to park the read/write head on the ramp 150 are provided in the load beam 141. The end-tabs 144 extend from the front end of the load beam 141 to a predetermined length. Specifically, the end-tab 144 is supported in contact with a surface of the ramp 150 when the hard disk drive is stopped. The end-tab 144 may be convex and face up toward the ramp 150. As a result of being shaped as discussed above, the stiffness of the end-tab 144 increases.

The flexure 145 supports the slider 146, on which the head is mounted. The flexure 145 is attached to a bottom surface of the load beam 141, that is, a surface facing the disk 120. A rear end of the flexure 145 is fixed to the disk facing surface of the load beam 141 by a welding or the like. A front end of the flexure 145 is extended toward the front end of the load beam 141, such that the flexure 145 is movable somewhat freely. Like the load beam 141, the flexure 145 is made of thin stainless steel. The flexure 145, however, is formed thinner than the load beam 141, for example, about 0.02 mm thick, in order for the free rolling and pitching of the sliders 146 attached thereto.

A dimple 143 is protrudedly formed on the load beam 141 toward the flexure 145 to provide a predetermined elastic force to the flexure 145. Due to such a structure, the flexure 145 is freely movable, so as to allow the smooth rolling and pitching of the slider 146 attached to the flexure 145.

As described above, the suspension assembly 140 of the present invention includes the flexure limiter 147 to limit the pitching and rolling movements of the front end of the flexure 145 within a predetermined range. The flexure limiter 147 is bent from the front end of the flexure 145 toward the end-tab 144. The flexure limiter 147 includes a hole 148 through which the end-tab 144 passes. Specifically, the flexure limiter 147 includes two vertical portions 147a bent from the front end of the flexure 145 in a vertical direction, and a horizontal portion 147b to connect upper ends of the two vertical portions 147a. The hole 148 is defined by the two vertical portions 147a and the horizontal portion 147b.

A predetermined first gap G₁ is formed between the horizontal portion 147b of the flexure limiter 147 and the end-tab 144 in a vertical direction, and a predetermined second gap G₂ is formed between the two vertical portion 147a and the end-tab 147b in a horizontal direction. At this time, the first and second gaps G₁ and G₂ are determined within the range between a minimum value at which the smooth rolling and pitching of the slider 146 may be secured, and a maximum value at which the deflection of the flexure 145 and the mutual collision with the adjacent slider 146 may be prevented.

In an embodiment of the invention, the flexure limiter 147, constructed as discussed above, is adjacently arranged to a contact portion between the end-tab 144 and the ramp 150.

When a vertical shock is applied to the suspension assembly 140, the front end of the flexure 145 moves in the pitching direction together with the flexure limiter 147. At this time, the load beam 141 limits an upward movement of the flexure 145 and a downward movement of the flexure 145 is limited because the horizontal portion 147b of the flexure limiter 147 becomes locked by an upper surface of the end-tab 144. Even when an external shock is applied very strongly, the flexure limiter 147 limits a range of the movement of the flexure 145 in the pitching direction, so as to overcome the problem of the conventional suspension assembly. That is, the problem in that the head mounted on the slider is damaged by the mutual collision of the facing sliders 146, which is caused by strong movement of the flexure 145 is substantially overcome.

Further, in an embodiment of the invention, in the suspension assembly 140 of the present invention, a distance between the flexure limiter 147 and the slider 146 is relatively long. This is due to the fact that the flexure limiter 147 is formed on the front end of the flexure 145. Accordingly, a shock transmission path from the flexure limiter 147 to the slider 146 is longer than corresponding features of the related art. As a result, the slider 146 is prevented from being separated from the flexure 145 due to the external shock.

When a horizontal shock is applied to the actuator 130 from the outside in operation of the hard disk drive, or if a horizontal shock is applied to the actuator 130 due to a collision with the crash stopper 162 in a reliability test of the hard disk drive, the front end of the flexure 145 moves in the rolling direction together with the flexure limiter 147. The rolling movement of the flexures 145, however, may be limited because the vertical portions 147a of the flexure limiter 147 are locked to the sides of the end-tab 144.

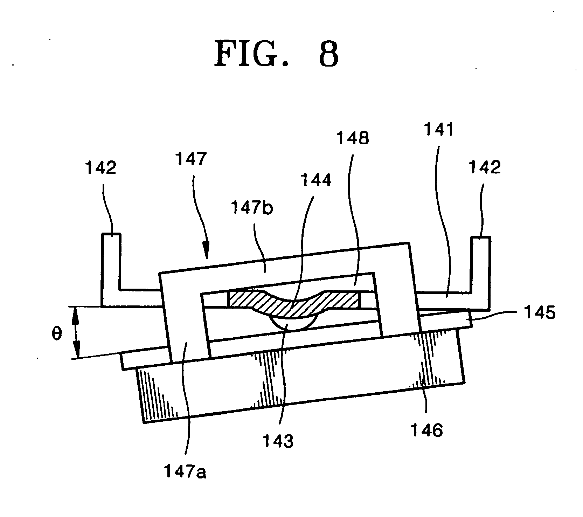

FIG. 7 is a view illustrating a relation between a bended deformation of the load beam due to an external shock and a position of the limiter in the suspension assembly according to the present invention.

Referring to FIG. 7, when a vertical shock is applied to the hard disk drive, the load beam 141 and the end-tab 144 are bent. At this time, although the deformation of the load beam 141 is relatively great, the deformation of the end-tab 144 disposed close to the ramp 150 is relatively small. The conventional suspension assembly, however, generally has a structure that limits the rolling and pitching movement of the flexure through a combination of the load beam and the flexure limiter. Therefore, the conventional suspension assembly has a problem in that the range of the pitching movement of the flexure is increased as much as the deformation of the load beam.

However, the suspension assembly 140 of the present invention has a structure that limits the rolling and pitching movement of the flexure 145 through a combination of the flexure limiter 147 and the end-tab 144. Also, the flexure limiter 147 is disposed at the contact portion between the end-tab 144 and the ramp 150 as close as possible. Owing to this construction, the deformation of the end-tab 144 at the position where the flexure limiter 147 is located is much smaller than that of the load beam 141, so as to minimize the increase in the range of the pitching movement of the flexure 145, which is caused by the deformation. Even when the first gap G₁, between the horizontal portion 147b of the flexure limiter 147 and the end-tab 144, is relatively large, the range of the pitching movement of the flexure 145 may be limited smaller compared with the related art.

FIG. 8 is a view illustrating an operation of the flexure limiter with respect to a twisted deformation of the flexure in the suspension assembly of FIG. 4.

Referring to FIG. 8, the twisted deformation of the flexures 145 may occur when the horizontal shock is applied to the actuator 130. Specifically, if the horizontal shock is so strong that the twisted deformation of the flexure 145 exceeds an elastic limit, a plastic deformation of the flexures 145 occurs. In this case, the read/write performance of the head mounted on the slider 146 may be degraded.

The suspension assembly 140 of the present invention provides a solution by which the above described problem is substantially alleviated. Specifically, as shown in FIG. 8, when the flexure 145 is twisted due to the horizontal shock, the upward movement of one edge portion of the flexure 145 is limited by the load beam 141, and the downward movement of the other edge portion of the flexure 145 is limited because the horizontal portion 147b of the flexure limiter 147 contacts with the upper surface of the end-tab 144. Since the twisted angle θ of the flexure 145 due to the horizontal shock is limited below a predetermined level, the plastic deformation of the flexure 145 is prevented. Here, the twisted angle θ is determined to be greater than an angle at which a smooth rolling of the slider 146 can be secured, and to be smaller than an angle at which the plastic deformation of the flexure 145 occurs.

As is described above, according to the present invention, the flexure limiter is provided on the front end of the flexure of the suspension assembly and can limit the twisted deformation of the flexure below a predetermined level, in addition to the pitching and rolling movements of the flexure, which is caused by the shock applied to the actuator. Accordingly, preventing the deformation of the flexure and the damage of the head, which are caused by the shock applied to the actuator, is possible. As a result, improving reliability in the operation of the hard disk drive is also possible.

Although a few embodiments of the present invention have been shown and described, it would be appreciated by those skilled in the art that changes may be made in these embodiments within the scope of the invention as defined by the claims.

## Claims

1. A suspension assembly (140) of an actuator (130) of a hard disk drive, which elastically biases a slider (146), on which a read/write head is mounted, toward a surface of a disk (120), the suspension assembly comprising:
a load beam (141) coupled to an end portion of a swing arm (132) of the actuator (130);
an end-tab (144) extended from a front end of the load beam (141);
a flexure (145) supporting the slider (146), the flexure having a rear end fixed to a disk facing surface of the load beam (141) and a front end extended toward a front end of the load beam, and
a flexure limiter (147) limiting a movement range of the flexure, wherein the flexure limiter (147) is bent from the front end of the flexure (145) over the end-tab (144) and has a hole (148) defined therein through which the end-tab (144) passes,
**characterized in that**
the end-tab (144) is a ramp-parking end-tab (144), wherein the corresponding flexure limiter (147) is spaced from the slider (146) and wherein the load beam (141) comprises a dimple (143) protruding in direction to the slider (146) to limit an upward movement of the flexure (145).

2. The suspension assembly according to claim 1, **characterized in that** the flexure limiter (147) is disposed close to a contact portion between the end-tab (144) and the ramp (150).

3. The suspension assembly according to claim 1 or 2, **characterized in that** the flexure limiter (147) comprises two vertical portions (147a) having upper ends, which are bent from the front end of the flexure (145) essentially in a vertical direction.

4. The suspension assembly according to claim 3, **characterized in that** the flexure limiter (147) further comprises a horizontal portion (147b) connecting the upper ends of the two vertical portions (147a).

5. The suspension assembly according to claim 4, **characterized in that** the hole (148) in the flexure limiter (147) is defined by inner surfaces of the vertical and horizontal portions (147a,b).

6. The suspension assembly according to claim 5, **characterized in that** a first gap, G₁, is formed between the horizontal portion (147b) of the flexure limiter (147) and the end-tab (144) essentially in a vertical direction, and a second gap, G₂, is formed between each of the vertical portions (147a) of the flexure limiter (147) and the end-tab (144) essentially in a horizontal direction.

7. The suspension assembly according to one of the previous claims, **characterized in that** edge portions are respectively formed along edges of the load beam (141) and sidewalls (142) are formed along the edge portions of the load beam.

8. The suspension assembly according to one of the previous claims, **characterized in that** the end-tab (144) is convex and comprises an arch facing toward the ramp (150).

9. The suspension assembly according to one of the previous claims, **characterized in that** the first and second gaps are to be within a set of minimum values at which a rolling and pitching of the slider may be secured, and a set of maximum values at which a collision between the slider and another slider is prevented.

10. The suspension assembly according to one of the previous claims, **characterized in that** when a vertical shock is applied, the front end of the flexure (145) moves in a pitching direction together with the flexure limiter (147).

11. The suspension assembly according to claim 10, **characterized in that** the beam (141) limits an upward movement of the flexure (145) and a downward movement of the flexure is limited because the horizontal portion (147b) of the flexure limiter (147) becomes locked by an upper surface of the end-tab (144).

12. The suspension assembly according to claim 11, **characterized in that** the flexure limiter (147) limits a range of the movement of the flexure (145) in the pitching direction.

13. An actuator (130) of a hard disk drive, including a swing arm (132) pivotally mounted on a base member (110) of the hard disk drive, a suspension assembly (140) to elastically bias a slider (146) toward a surface of a disk (120), a read/write head mounted on the slider (146), and a voice coil motor (137, 138) to rotate the swing arm so as to move the read/write head to a predetermined position of the disk, **characterized by** said suspension assembly (140) with the features of one of claims 1 to 12.

## Patentansprüche

1. Aufhängungsanordnung (140) eines Zugriffarms (130) eines Festplatten-Laufwerks, die ein Gleitelement (146), an dem ein Lese/Schreib-Kopf angebracht ist, elastisch auf eine Oberfläche einer Platte (120) zu spannt, wobei die Aufhängungsanordnung umfasst:
einen Lastträger (141), der mit einem Endabschnitt eines Schwenkarms (132) des Zugriffarms (130) gekoppelt ist;
eine Abschluss-Zunge (144), die sich von einem vorderen Ende des Lastträgers (141) erstreckt;
ein Biegeelement (145), das das Gleitelement (146) trägt, wobei ein hinteres Ende des Biegeelementes an einer der Platte zugewandten Fläche des Lastträgers (141) befestigt ist und sich ein vorderes Ende auf ein vorderes Ende des Lastträgers zu erstreckt;
eine Biege-Begrenzungseinrichtung (147), die einen Bewegungsbereich des Biegeelementes begrenzt, wobei die Biege-Begrenzungseinrichtung (147) von dem vorderen Ende des Biegeelementes (145) über die Abschluss-Zunge (144) gebogen ist und ein Loch (148) darin ausgebildet ist, durch das die Abschluss-Zunge (144) hindurch tritt,
**dadurch gekennzeichnet, dass**
die Abschluss-Zunge (144) eine Rampen-Park-Abschluss-Zunge (144) ist, wobei die entsprechende Biege-Begrenzungseinrichtung (147) von dem Gleitelement (146) beabstandet ist und der Lastträger (141) eine Vertiefung (143) umfasst, die in einer Richtung zu dem Gleitelement (146) vorsteht, um eine Aufwärtsbewegung des Biegeelementes (145) zu begrenzen.

2. Aufhängungsanordnung nach Anspruch 1, **dadurch gekennzeichnet, dass** die Biege-Begrenzungseinrichtung (147) nahe an einem Kontaktabschnitt zwischen der Abschlusszunge (144) und der Rampe (150) angeordnet ist.

3. Aufhängungsanordnung nach Anspruch 1 oder 2, **dadurch gekennzeichnet, dass** die Biege-Begrenzungseinrichtung (147) zwei vertikale Abschnitte (147a) mit oberen Enden umfasst, die von dem vorderen Ende des Biegeelementes (145) im wesentlichen in einer vertikalen Richtung gebogen sind.

4. Aufhängungsanordnung nach Anspruch 3, **dadurch gekennzeichnet, dass** die Biege-Begrenzungseinrichtung (147) des weiteren einen horizontalen Abschnitt (147b) umfasst, der die oberen Enden der zwei vertikalen Abschnitte (147a) verbindet.

5. Aufhängungsanordnung nach Anspruch 4, **dadurch gekennzeichnet, dass** das Loch (148) in der Biege-Begrenzungseinrichtung (147) durch Innenflächen der vertikalen und horizontalen Abschnitte (147a,b) definiert wird.

6. Aufhängungsanordnung nach Anspruch 5, **dadurch gekennzeichnet, dass** ein erster Zwischenraum G₁ zwischen dem horizontalen Abschnitt (147b) der Biege-Begrenzungseinrichtung (147) und der Abschlusszunge (144) im wesentlichen in einer vertikalen Richtung ausgebildet ist und ein zweiter Zwischenraum G₂ zwischen jedem der vertikalen Abschnitte (147a) der Biege-Begrenzungseinrichtung (147) und der Abschlusszunge (144) im wesentlichen in einer horizontalen Richtung ausgebildet ist.

7. Aufhängungsanordnung nach einem der vorangehenden Ansprüche, **dadurch gekennzeichnet, dass** Randabschnitte jeweils an Rändern des Lastträgers (141) ausgebildet sind und Seitenwände (142) entlang der Randabschnitte des Lastträgers ausgebildet sind.

8. Aufhängungsanordnung nach einem der vorangehenden Ansprüche, **dadurch gekennzeichnet, dass** die Abschlusszunge (144) konvex ist und einen Bogen umfasst, der der Rampe (150) zugewandt ist.

9. Aufhängungsanordnung nach einem der vorangehenden Ansprüche, **dadurch gekennzeichnet, dass** der erste und der zweite Zwischenraum innerhalb einer Gruppe minimaler Werte, bei denen ein Rollen und Neigen des Gleitelementes gesichert werden kann, und einer Gruppe maximaler Werte liegen sollen, bei denen eine Kollision zwischen dem Gleitelement und einem anderen Gleitelement verhindert wird.

10. Aufhängungsanordnung nach einem der vorangehenden Ansprüche, **dadurch gekennzeichnet, dass**, wenn ein vertikaler Stoß wirkt, das vordere Ende des Biegeelementes (145) sich zusammen mit der Biege-Begrenzungseinrichtung (147) in einer Neigerichtung bewegt.

11. Aufhängungsanordnung nach Anspruch 10, **dadurch gekennzeichnet, dass** der Lastträger (141) eine Aufwärtsbewegung des Biegeelementes (145) begrenzt und eine Abwärtsbewegung des Biegeelementes begrenzt wird, da der horizontale Abschnitt (147b) der Biege-Begrenzungseinrichtung (147) durch eine obere Fläche der Abschlusszunge (144) fixiert wird.

12. Aufhängungsanordnung nach Anspruch 11, **dadurch gekennzeichnet, dass** die Biege-Begrenzungseinrichtung (147) einen Bewegungsbereich des Biegeelementes (145) in der Neigerichtung begrenzt.

13. Zugriffsarm (130) eines Festplatten-Laufwerks, der einen Schwenkarm (132), der schwenkbar an einem Basiselement (110) des Festplatten-Laufwerks angebracht ist, eine Aufhängungsanordnung (140), die ein Gleitelement (146) elastisch auf eine Oberfläche einer Platte (120) zu spannt, einen Lese-/Schreib-Kopf, der an dem Gleitelement (146) angebracht ist, und einen Linearmotor (137, 138) enthält, der den Schwenkarm so dreht, dass er den Lese-/Schreib-Kopf an eine vorgegebene Position der Platte bewegt, **gekennzeichnet durch** die Aufhängungsanordnung (140) mit den Merkmalen nach einem der Ansprüche 1 bis 12.

## Revendications

1. Ensemble de suspension (140) d'un actionneur (130) d'un disque dur, qui sollicite de manière élastique un élément coulissant (146), sur lequel est montée une tête de lecture / écriture, vers une surface d'un disque (120), l'ensemble de suspension comprenant :
un fléau de charge (141) qui est couplé à une portion d'extrémité d'un bras pivotant (132) de l'actionneur (130) ;
une languette d'extrémité (144) qui se prolonge à partir d'une extrémité avant du fléau de charge (141) ;
un élément de flexion (145) qui supporte l'élément coulissant (146), l'élément de flexion ayant une extrémité arrière qui est fixée à une surface faisant face à un disque du fléau de charge (141), et une extrémité avant qui se prolonge vers une extrémité avant du fléau de charge ; et
un limiteur de flexion (147) qui limite une plage de mouvement de l'élément de flexion, le limiteur de flexion (147) étant recourbé à partir de l'extrémité avant de l'élément de flexion (145) par-dessus la languette d'extrémité (144) et comporte un trou (148) défini à l'intérieur, au travers duquel passe la languette d'extrémité (144),
**caractérisé en ce que** :
la languette d'extrémité (144) est une languette d'extrémité de stationnement de rampe (144), le limiteur de flexion correspondant (147) étant espacé par rapport à l'élément coulissant (146), et le fléau de charge (141) comprenant une protubérance (143) qui fait saillie dans une direction vers l'élément coulissant (146) dans le but de limiter un mouvement vers le haut de l'élément de flexion (145).

2. Ensemble de suspension selon la revendication 1, **caractérisé en ce que** le limiteur de flexion (147) est disposé à proximité d'une portion de contact entre la languette d'extrémité (144) et la rampe (150).

3. Ensemble de suspension selon la revendication 1 ou 2, **caractérisé en ce que** le limiteur de flexion (147) comprend deux portions verticales (147a) ayant des extrémités supérieures qui sont recourbées à partir de l'extrémité avant de l'élément de flexion (145) sensiblement dans une direction verticale.

4. Ensemble de suspension selon la revendication 3, **caractérisé en ce que** le limiteur de flexion (147) comprend en outre une portion horizontale (147b) qui relie les extrémités supérieures des deux portions verticales (147a).

5. Ensemble de suspension selon la revendication 4, **caractérisé en ce que** le trou (148) dans le limiteur de flexion (147) est défini par des surfaces intérieures des portions verticales et horizontales (147a, b).

6. Ensemble de suspension selon la revendication 5, **caractérisé en ce que**, un premier écart - G₁ - est formé entre la portion horizontale (147b) du limiteur de flexion (147) et la languette d'extrémité (144) sensiblement dans une direction verticale, et **en ce que**, un deuxième écart - G₂ - est formé entre chacune des portions verticales (147a) du limiteur de flexion (147) et la languette d'extrémité (144) sensiblement dans une direction horizontale.

7. Ensemble de suspension selon l'une des revendications précédentes, **caractérisé en ce que** des portions de bord sont respectivement formées le long de bords du fléau de charge (141), et **en ce que** des parois latérales (142) sont formées le long des portions de bord du fléau de charge.

8. Ensemble de suspension selon l'une des revendications précédentes, **caractérisé en ce que** la languette d'extrémité (144) est convexe et comprend un arc qui est dirigé vers la rampe (150).

9. Ensemble de suspension selon l'une des revendications précédentes, **caractérisé en ce que** les premier et deuxième écarts doivent se situer à l'intérieur d'un ensemble de valeurs minimum par rapport auquel un roulage et un tangage de l'élément coulissant peuvent être sécurisés, et à l'intérieur d'un ensemble de valeurs maximum par rapport auquel une collision entre l'élément coulissant et un autre élément coulissant est empêchée.

10. Ensemble de suspension selon l'une des revendications précédentes, **caractérisé en ce que**, quand un choc vertical est appliqué, l'extrémité avant de l'élément de flexion (145) se déplace dans une direction de tangage en même temps que le limiteur de flexion (147).

11. Ensemble de suspension selon la revendication 10, **caractérisé en ce que** le fléau de charge (141) limite un mouvement vers le haut de l'élément de flexion (145), et **en ce que** un mouvement vers le bas de l'élément de flexion est limité en raison du fait que la portion horizontale (147b) du limiteur de flexion (147) se trouve bloquée par une surface supérieure de la languette d'extrémité (144).

12. Ensemble de suspension selon la revendication 11, **caractérisé en ce que** le limiteur de flexion (147) limite une plage de mouvement de l'élément de flexion (145) dans une direction de tangage.

13. Actionneur (130) d'un lecteur de disque dur, comprenant un bras pivotant (132) monté pour un pivotement sur un élément formant base (110) du lecteur de disque dur, un dispositif de suspension (140) adapté pour solliciter de manière élastique un élément coulissant (146) vers une surface d'un disque (120), une tête de lecture / écriture montée sur l'élément coulissant (146), et un moteur de bobine acoustique (137, 138) adapté pour faire tourner le bras pivotant de façon à déplacer la tête de lecture / écriture vers une position prédéterminée du disque, **caractérisé en ce que** ledit dispositif de suspension (140) présente les caractéristiques définies dans l'une des revendications 1 à 12.
